# EUROPEAN PATENT SPECIFICATION

(11) **EP 3 451 099 B1**
(45) Date of publication and mention of the grant of the patent: **15.12.2021**
(21) Application number: 17188106.3
(22) Date of filing: 28.08.2017
(51) Int. Cl.: G05B 23/02

(54) **MAINTENANCE MANAGEMENT SYSTEM FOR AUTOMATICALLY LOCATING A FAULT IN A PLANT**
WARTUNGSVERWALTUNGSSYSTEM ZUR AUTOMATISCHEN ORTUNG VON FEHLERN IN EINER ANLAGE
SYSTÈME DE GESTION DE MAINTENANCE POUR LOCALISER AUTOMATIQUEMENT UN DÉFAUT DANS UNE INSTALLATION

(43) Date of publication of application: 06.03.2019
(73) Proprietor: Siemens Aktiengesellschaft, 80333 München (DE)
(72) Inventor: Gupta, Rohit Kumar, 122015 Gurgaon (IN)
(74) Representative: Isarpatent

(56) References cited:
- EP-A1- 2 853 969
- US-A1- 2005 134 284
- US-A1- 2013 123 951

## Description

The present invention relates to a field of a maintenance management system, and more particularly relates to automatically locating faults in a plant environment.

Generally, in a plant (e.g., a manufacturing set up, power generation plant, etc.), operation of various equipments such as boilers, turbines, reactors along with different processes are monitored and controlled by an automation system. An automation system may comprise of one or more controllers, human-machine interface devices, Input/Output switches, cabinets, racks, field devices (pressure transmitter, etc). Typically, in the automation system, a controller communicates with the field devices using control signals. The control signals are communicated via wires connecting the controller and the field devices through one or more terminal boxes.

During normal operation of plant, it is possible that end connection of wires may experience loose contact at junction points in the terminal boxes. Due to this, communication between the controller and the field equipment may be abruptly stopped. Also, such loose contacts may trigger false alarms at a human-machine interface device. This may sometimes lead to disruption in normal operation or abnormal operation of the equipments. The loose contact at junction points may also cause damage to the field devices and/or the equipments and may also result in fire in the plant due to short circuit.

When such an issue is noticed, a field engineer in the plant tries to check all possible causes that would have lead to the communication failure. Once the field engineer finds out that the communication failure occurred due to lose contact, the field engineer needs to then find out exact location of loose contact. This is not only challenging but time consuming and tedious activity, and may result in high down time and maintenance costs. At times, it is difficult to locate a fault due to small size of wires and terminal connectors.

In document US2005134284 (Al) a method for testing multiple elements of a work machine, including a control system, a component, a sub-component that is influenced by operations of the component, and a sensor that monitors a characteristic of the sub-component is described.

Document US2013123951 (Al) describes a system, which comprises a human machine interface (HMI) configured to provide visualizations of one or more device elements that correspond to one or more components in industrial automation system on an HMI screen. Thereby the HMI includes computer-executable instructions stored on a tangible machine-readable medium.

In light of the above, there exists a need for a method and system which is configured for determining exact location of faults such as loose contact in the automation system of the plant.

Therefore, it is an object of the present invention to provide a method and system which is configured for automatically locating faults in the automation system of the plant.

The object of the present invention is achieved by a method of automatically locating a fault in an automation system in a plant environment, according to claim 1. The method comprises providing a wiring network map of the automation system. The wiring network map is generated using wiring diagrams of the automation system. In an embodiment, the wiring network map is generated by merging wiring diagrams associated with the automation system. The wiring diagrams may comprise wiring diagrams associated with engineering of the automation system and wiring diagrams resulting out of commissioning of the automation system. The wiring network map is a representation of a physical wiring system in the plant environment. The wiring network map is indicative of connection paths connecting automation devices via respective junction points. The wiring network map comprises unique addresses associated with the connection paths, unique identifiers associated with the automation devices and the junction points, and automated function instances associated with the automation system linked to the unique identifiers.

The method comprises determining a fault in least one connection path between automation devices in the automation system in real-time. For example, the automation devices may include controller, field devices such as pressure transmitters, etc. The connection path comprises one or more junction points which connect the automation devices via signal wires. For example, the connection path may include terminal box, I/O modules, cabinets, junction box, etc. The fault may have occurred due to lose connection between end signal wires and wire holder, defective signal wires and so on. The fault is said to be present in the connection path when the automation devices are not able to send or receive controls signal over the connection path.

The method comprises determining a location of a fault along the connection path between the automation devices. The location of the fault is indicative of a physical location of the junction point in the plant at which the fault exists. The method also comprises rendering the location of the fault on the wiring network map of the automation system. Consequently, the field engineer is automatically made aware of the junction point at which fault exists so that the field engineer can repair the fault without spending much time in manually locating the fault. Advantageously, the location of the fault in the automation system can be accurately represented using the wiring network map.

Additionally, the method may comprise determining a current location of a field engineer in the plant based on location coordinates of a handheld device of the field engineer, and computing a optimal route to the location of the fault in the connection path. Then, the method comprises navigating the field engineer from the current location to the location of the fault via the optimal route using the wiring network map rendered on the handheld device. Thus, the field engineer is guided to reach the location of the fault using the optimal route displayed on the handheld device 124.

Also, the method may comprise providing an augmented view of the junction point superimposed with information associated with the augmented view of the junction point during repair of the fault at the junction point. Advantageously, the field engineer can see real-time voltage and current values along with augmented view of the junction point. This ensures in successful repairing of the fault at the junction point. Furthermore, the method may comprise predicting occurrence of a fault in the automation system by analyzing information of previous faults occurred in the automation system.

Therein, in determining the fault in the at least one connection path between the automation devices, the method may comprise transmitting a heart beat signal to the automation device positioned at the end of each connection path from the automation device at the start of said each connection path using an unique address of said each connection path. In one embodiment, the heart beat signal is transmitted periodically to the end automation device. In another embodiment, the heart beat signal is transmitted when the fault is detected. In yet another embodiment, the heart beat signal is transmitted upon receiving a request to locate the fault from the handheld device. The method may comprise determining whether an acknowledgement signal is received from the automation device at the end of said each connection path in response to the heart beat signal. The acknowledgement signal is not received if there is a fault at one of the junction points in the connection path. Furthermore, the method may comprise determining the at least one connection path from which the acknowledgment signal is not received. The determined connection path is a connection path in which the fault exists.

In determining the location of the fault in the at least one connection path, the method according to the invention comprises measuring real-time voltage and current values at each junction point in the connection path using voltage and current measurement sensors. Furthermore, the method may comprise comparing the real-time voltage and current values associated with the respective junction point with corresponding reference voltage and current values associated with the junction point. Then, the method may comprise determining whether the real-time voltage and current values associated with the respective junction point matches with corresponding reference voltage and current values associated with the junction point. Moreover, the method may comprise identifying at least one junction point whose real-time voltage and current values do not match with the reference voltage and current values, wherein the fault exists at the identified junction point.

The object of the present invention is also achieved by an apparatus according to claim 7 comprising a processor, and a memory coupled to the processor. The apparatus may include a server located in a plant, a server remotely located from the plant, a cloud infrastructure such as public cloud or private cloud, and the like. Alternatively, the apparatus may include a controller, human-machine interface device, field devices, etc. The memory comprises a maintenance management module stored in the form of machine-readable instructions and executable by the processor.

The maintenance management module is configured for providing a wiring network map of the automation system. The maintenance management module is configured for generating the wiring network map by merging wiring diagrams from engineering time and commissioning time. The maintenance management module is configured for updating the wiring network map based on changes to the plant environment. During the operation of the plant, the maintenance management module is configured for determining a fault in least one connection path between automation devices in an automation system of a plant. The connection path comprises one or more junction points which connect the automation devices via signal wires.

The maintenance management module is configured for determining a location of a fault along the connection path between the automation devices. The location of the fault is indicative of a physical location of the junction point in the plant at which the fault exists. The maintenance management module is configured for rendering the location of the fault on the wiring network map of the automation system.

The maintenance management module is also configured for determining a current location of a field engineer in the plant based on location coordinates of a handheld device of the field engineer, and computing an optimal route to the location of the fault in the connection path. The maintenance management module is configured for navigating the field engineer from the current location to the location of the fault via the optimal route using the wiring network map rendered on the handheld device.

Additionally, the maintenance management module is configured for providing an augmented view of the junction point superimposed with information associated with the augmented view of the junction point during repair of the fault at the junction point. Furthermore, the maintenance management module is configured for predicting occurrence of a fault in the automation system by analyzing information of previous faults occurred in the automation system.

Therein, in determining the fault in the at least one connection path, the maintenance management module is configured for transmitting a heart beat signal to the automation device positioned at the end of each connection path from the automation device at the start of said each connection path using an unique address of said each connection path. The maintenance management module is configured for determining whether an acknowledgement signal is received from the automation device at the end of said each connection path in response to the heart beat signal. The maintenance management module is configured for determining the at least one connection path from which the acknowledgment signal is not received. The determined connection path is a connection path in which the fault exists.

In determining the location of the fault in the at least one connection path, the maintenance management module is configured for comparing real-time voltage and current values associated with the respective junction point with corresponding reference voltage and current values associated with the junction point. The maintenance management module is configured for determining whether the real-time voltage and current values associated with the respective junction point matches with corresponding reference voltage and current values associated with the junction point. The maintenance management module is configured for identifying at least one junction point whose real-time voltage and current values do not match with the reference voltage and current values. The fault exists at the identified junction point.

The object of the present invention is achieved by a maintenance management system for automatically location fault in an automation system of a plant. The maintenance management system comprises a server configured for performing method steps described above, and one or more handheld devices adapted for assisting field engineer in maintenance and repair activities in the plant. The one or more handheld devices are communicatively coupled to the server via a network. The maintenance management system also comprises a maintenance database configured for storing information related to maintenance of the automation system.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a plant environment comprising an automation system, according to an embodiment of the present invention;
- FIG 2: illustrates a block diagram of a server of FIG 1, according to an embodiment of the present invention;
- FIG 3: is a process flowchart illustrating an exemplary method of generating a wiring network map representing a physical wiring system in the automation system, according to an embodiment of the present invention;
- FIG 4: is a process flowchart illustrating an exemplary method of locating a fault in the automation system, according to an embodiment of the present invention;
- FIG 5: is a process flowchart illustrating an exemplary method of determining location of the fault in the automation system, according to an embodiment of the present invention;
- FIG 6: is a screenshot view of plant data displayed on a human-machine interface of the automation system, according to an embodiment of the present invention; and
- FIG 7: illustrates a schematic representation of the handheld device displaying location of wire break on a wiring network map, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

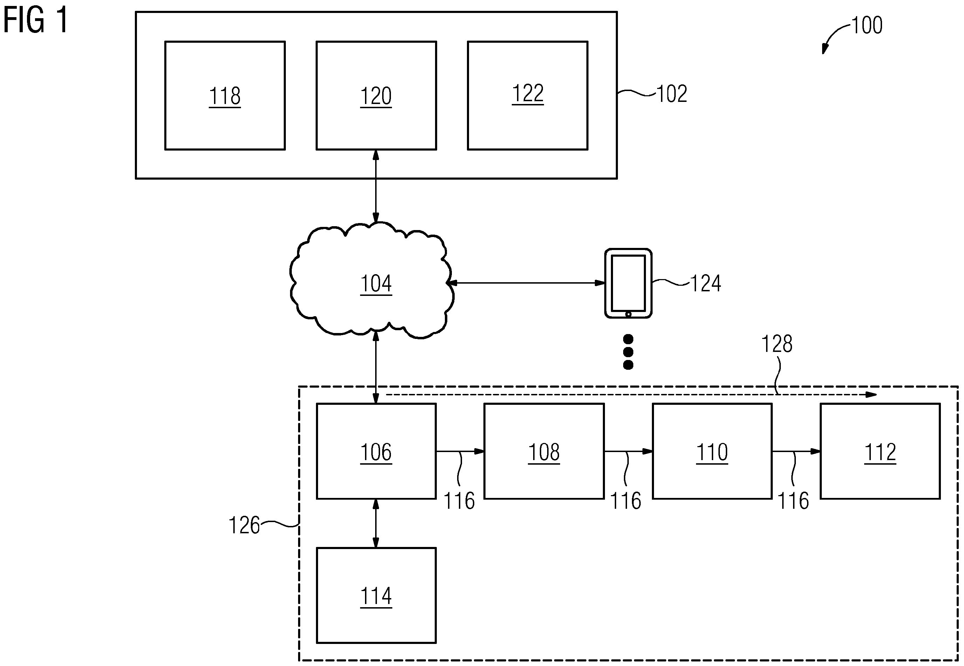

FIG 1 is a schematic representation of a plant environment 100 comprising an automation system 126, according to an embodiment of the present invention. The automation system 126 comprises a controller 106, an input/output (I/O) module 108, a terminal box 110, a field device 112. The controller 106 is connected to the field device 112 via the I/O module 108 and the terminal box 110 using signal wires 116. The HMI 114 is connected to the controller 106 for monitoring and controlling the plant environment 100. In an exemplary implementation, the HMI 114 may be a distributed control system panel displaying information associated with various processes and equipments in the plant environment 100.

The controller 106 communicates control signals to the field device 112 via the signal wires 116, thereby making the field device 112 to perform an action based on the control signals. The controller 106 generates control signals in response to commands received from the HMI 114. The commands are initiated by the operator to control processes occurring in the plant environment 100 in response to parameters associated with the processes sensed by sensors deployed in the plant environment 100. The automation system 126 illustrated in FIG 1 is an exemplary automation system and may include a plurality of controllers, I/O devices, terminal boxes and field devices, and HMI in the plant environment 100. However, for the purpose of illustration, a portion of the automation system 126 is illustrated in FIG 1.

The plant environment 100 also comprises a maintenance management system. The maintenance management system comprises a server 102 connected to the automation system 126, and a handheld device(s) 124 of a field engineer via a network 104. The server 102 is configured for providing maintenance related assistance to the field engineer via the handheld device 124. In an embodiment, the server 102 is configured for locating a fault in the automation system 126. The server 102 is also configured for rendering the location of the fault in the automation system 126 on the handheld device 124 of the field engineer, thereby assisting the field engineer to reach the location of the fault. The server 102 also communicates with the automation system 126 during maintenance activity or during plant operation.

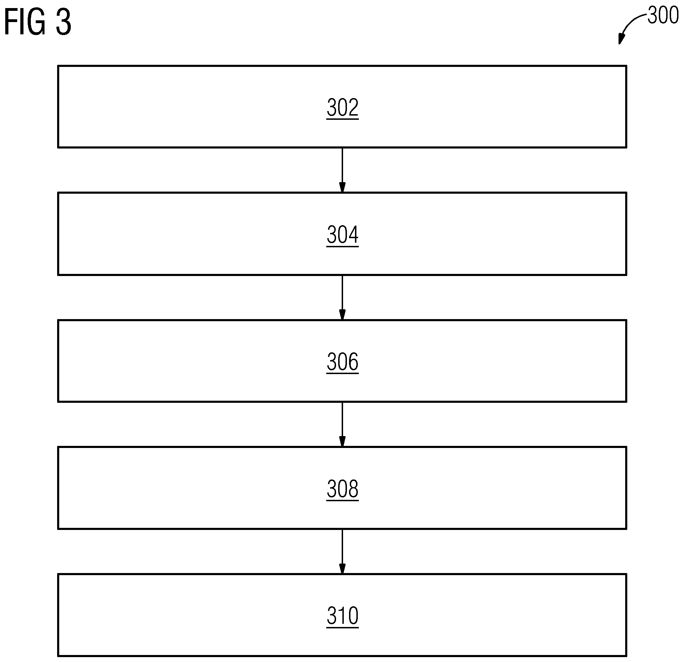

As shown in FIG 1, the server 102 comprises a maintenance management module 118, a maintenance database 120, and a communication interface 122. The maintenance management module 118 is configured for providing a wiring network map associated with the automation system 126. The maintenance management module 118 generates the wiring network map by merging wiring diagrams of the automation system 126. The wiring diagram map is a digital representation of the physical wiring system in the plant environment 100 with information associated with the automation system 126. For example, the wiring network map is indicative of the connection path 128 connecting automation devices 106, 112 via junction points. Also, the wiring network map comprises unique address associated with the connection path 128, unique identifiers associated with the automation devices 106, 112 and the associated junction points, and automated function instances associated with the automation system 126 linked to the unique identifiers. The steps involved in generating the wiring network map are explained in greater detail in the following description with reference to FIG 3.

The maintenance management module 118 is configured for determining a connection path between the controller 106 and the field device 112 in which fault exists based occurrence of an event. The event can be a request for location of the fault, an alarm for occurrence of the fault, and so on. The connection path 128 comprises a plurality of junction points connecting the controller 106 and the field devices 112 via signal wires 116. The junction points may be the I/O module 108, the terminal boxes 110, etc. In an exemplary implementation, the maintenance management module 118 is configured for sending a heart beat signal from the controller 106 to the field device 112. In computer science, a heart beat signal refers to a periodic signal generated by hardware or software to indicate normal operation or to synchronize other components of a system. In the preferred embodiment, the heart beat signal may be a pulse with specific bit format transmitted by the automation device 106 to the automation device 112 via the signal wires to check whether any fault exists in the connection path 128. The specific bit format may include bit 1: sender source bit, bit 2-7: unique coded bit which indicates connection path, bit 8: acknowledgement bit.

The maintenance management module 118 is configured for determining whether an acknowledgement signal is received by the controller 106 from the field device 112 in response to the heart beat signal. The maintenance management module 118 is configured for determining existence of fault in the connection path between the controller 106 and the field device 112.

The maintenance management module 118 is configured for determining a location of the fault along the connection path. In an exemplary implementation, the maintenance management module 118 is configured for comparing voltage and current values at each of the junction points in the connection path with reference voltage and current values of the junction points. The maintenance management module 118 is configured for determining the location of the fault at the junction point whose voltage and current values do not match with reference voltage and current values. The maintenance management module 118 is configured for rendering the location of the fault on a wiring network map displayed on the handheld device 124 of the field engineer. For example, the maintenance management module 118 is configured for sending unique identifier information associated with the junction point where fault exist to the handheld device 124. Accordingly, the handheld device 124 displays the junction point where fault exists on the wiring network map. The wiring network map is a representation of a physical wiring system of the automation system 126.

The maintenance management module 118 is configured for computing an optimal route to reach the location of the fault from current location of the field engineer. The maintenance management module 118 is also configured for navigating the field engineer from the current location to the location of the fault via the optimal route using the wiring network map rendered on the handheld device 124 of the field engineer.

The maintenance management module 118 is configured for providing an augmented view of the junction point superimposed with information associated with the augmented view of the junction point during repair of the fault at the junction point. If the field engineer is wearing augmented reality glasses, the maintenance management module 118 may provide the augmented view of the junction point on the augmented reality glasses. Alternatively, the maintenance management module 118 may provide the information associated with the augmented view of the junction point on the handheld device 124.

The maintenance management module 118 is configured for provide procedure for repairing the fault as voice or text output through the augmented view. The information associated with the augmented view of the junction point may indicate whether the fault is repaired. In some embodiments, the maintenance management module 118 may determine whether real-time voltage and current values at the junction point being repaired matches the reference voltage and current values. The maintenance management module 118 may provide the real-time voltage and current values and the reference voltage and current values as the information associated with the augmented view to the field engineer. If there is a match, the fault at the junction point is considered as repaired successfully.

The maintenance management module 118 is configured for predicting occurrence of fault in the automation system 126 by analyzing information of faults occurred in the automation system. The information of faults may include location of the fault, reason for occurrence of the fault, periodicity of repeated occurrence of the fault, nature of the fault, and so on. The maintenance management module 118 is configured for displaying prediction of fault at a specific location in the automation system on the wiring network map rendered on the handheld device 126. Advantageously, preventive maintenance can be carried out thereby preventing the fault from occurring. This prevent significant amount of plant downtime.

The maintenance database 120 stores the wiring network map representing a physical wiring system in the plant environment 100. The maintenance database 120 may also store information of junction points at which faults previously occurred and repaired. This information assists in determining whether such fault is repeatedly occurring at a specific junction point ahead of time. Also, the information may help in conducting preventive maintenance of the junction points where there is likelihood of occurrence of the fault. The maintenance database 120 stores information of augmented views of the plant environment such as images of the plant environment and voltage and current values of junction points. The maintenance database 120 may store information associated with the field engineer as such a profile of the field engineer. The information helps in contacting the field engineer in case a fault is identified in the plant environment 100. The communication interface 122 enables the server 102 to communicate with the controller 106 and the handheld device(s) 124 via one or more communication protocols known in the art.

One skilled in the art could understand that the server 102 may be a dedicated server residing inside a plant or a remote server residing outside the plant. For example, the server 102 may be a component of a distributed control system. Also, one skilled in the art could understand that the server 102 may be a component of a cloud infrastructure for providing the functionality described above. Also, one can envision that the maintenance management module 118 can be part of the distributed control system or a cloud infrastructure. The maintenance management module 118 may take a form of software application executed on the distributed control system or hosted on a cloud platform and executed by one or more processors on the cloud platform. Alternatively, the maintenance management module 118 can be embedded software in a control system code.

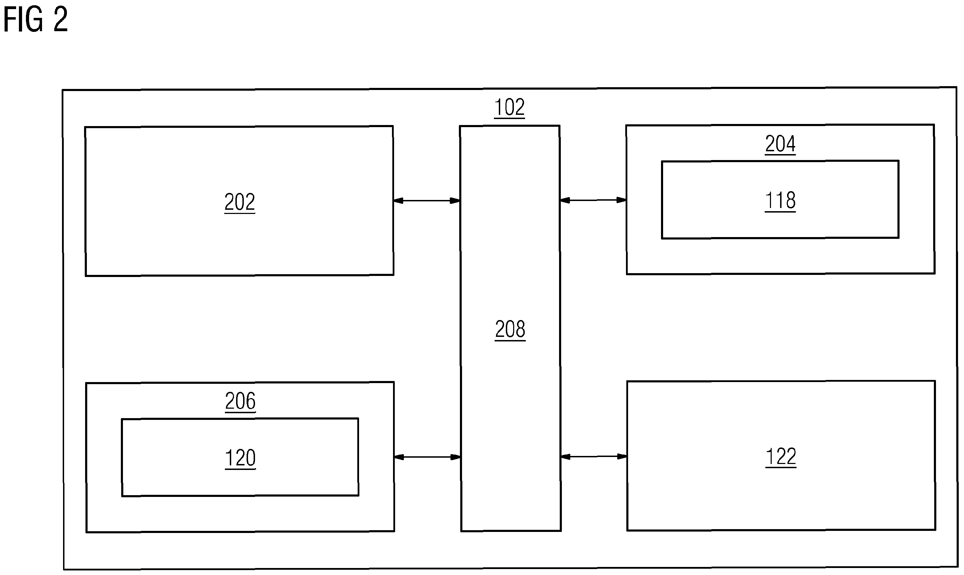

FIG 2 illustrates a block diagram of the server 102 of FIG 1, according to an embodiment of the present invention. In FIG 1, the server 102 comprises a processor 202, a memory 204, a storage unit 206, a bus 208, and the communication interface 122.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 includes the maintenance management module 118. The maintenance management module 118 is stored in the form of machine-readable instructions on any of the above-mentioned storage media and may be executed by the processor 202.

For example, when the instructions are executed by the processor 202, the maintenance management module 118, causes the processor 202, to perform the functionalities described above. In an embodiment, the maintenance management module 118 causes the processor 202 to determine location of a fault in the automation system 126 and render the location of the fault on a wiring network map of the automation system displayed on the handheld device 124. Also, the maintenance management module 118 causes the processor 202 to determine an optimal route to reach the location of the fault and navigate the field engineer to the location of the fault via the optimal route. Moreover, the maintenance management module 118 also causes the processor 202 to provide an augmented view of a junction point where the fault exists, thereby assisting the field engineer in repairing the fault. The maintenance management module 118 may cause the processor 202 to give real-time update about status of the repair to the field engineer through the augmented view.

The storage unit 206 may be a non-transitory storage medium configured for storing the maintenance database 120. The communication interface 122 may be a network interface for enabling communication between the server 102, and the automation system 126 and the handheld device 124 using communication protocols. The bus 208 acts as an interconnect unit between the processor 202, the memory 204, the storage unit 206 and the communication interface 122.

FIG 3 is a process flowchart 300 illustrating an exemplary method of generating a wiring network map representing a physical wiring system in the automation system 126, according to an embodiment of the present invention. At step 302, wiring diagrams associated with a physical wiring system of the automation system 126 are imported by the server 102. For example, the server 102 imports a wiring diagram created during engineering of the automation system 126 and a wiring diagram created during commissioning or installation of the automation system 126 in an extendable mark-up language format. The wiring diagrams are imported from external databases such as engineering database residing in an engineering system and a commissioning database residing in a commissioning system. For example, a wiring diagram obtained from the commissioning system may be a process hookup diagram and the wiring diagram obtained from the engineering system may be an engineering diagram.

At step 304, a wiring diagram network map is created by merging the imported wiring diagrams. At step 306, an unique identifier is assigned to each node in the wiring network map. The node in the wiring network map can be a junction box, terminal points etc. The unique identifier is assigned to each node so as to form a unique connection path between the connection devices. The combination of the unique identifiers associated with the nodes that are part of the connection path forms a unique address of the connection path. At step 308, an automation function instance associated with respective automation device in the automation system 126 is linked to the corresponding unique identifier in the wiring network map. The automation function instances are linked to respective unique identifiers such as information pertaining to the automation function instance in a distributed control system can be synchronized in real-time. This enables the maintenance management module 118 to display information associated with automatic function instances in a wiring network map in real-time. At step 310, the wiring network map is stored in the maintenance database 120.

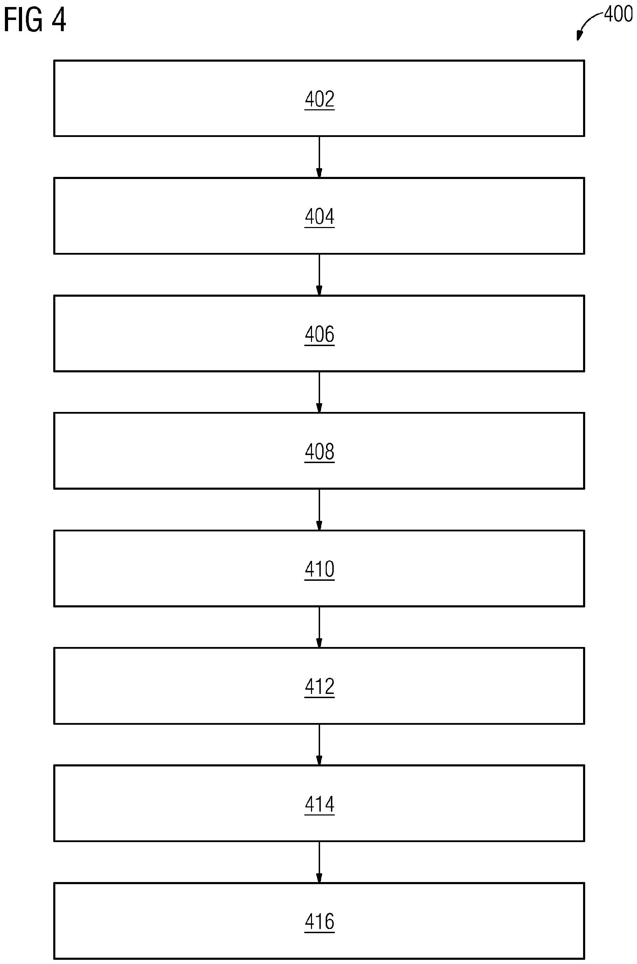

FIG 4 is a process flowchart 400 illustrating an exemplary method of locating a fault in the automation system 126, according to an embodiment of the present invention. At step 402, an event associated with the automation system 126 is detected by the server 102. In one embodiment, the event includes an alarm indicating an issue related to faulty wiring in the automation system 126. In another embodiment, the event includes a request to provide a location of fault in the automation system 126 from the handheld device 124 of a field engineer. The request comprises location of the field engineer. The location can be indicated by Global Positioning System coordinates, information (unique code) of automation device/equipment located near to the field engineer, etc. The unique code can be in the form of barcode or Quick Response (QR) code.

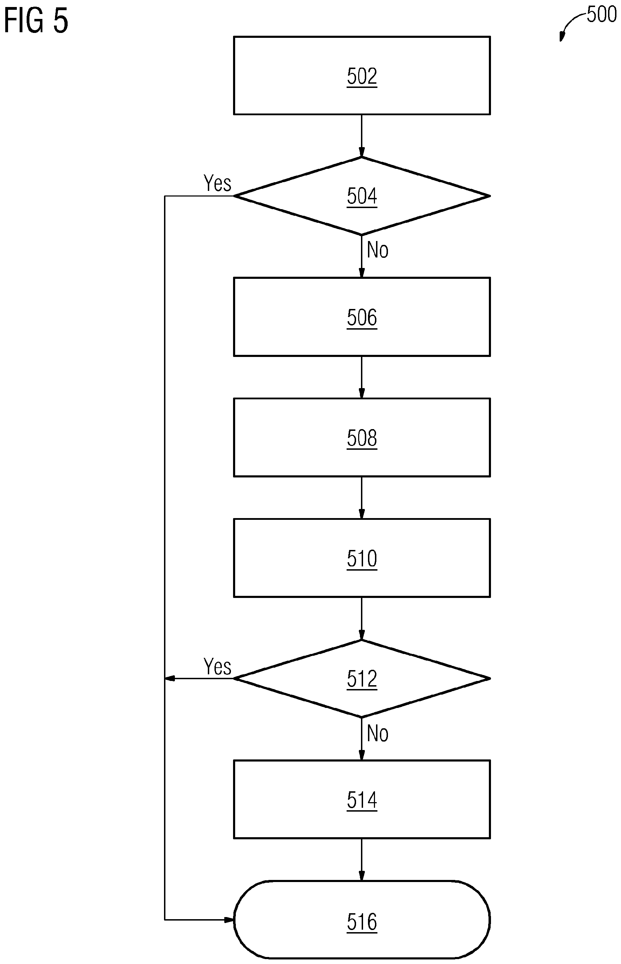

At step 404, a fault is determined along at least one connection path 128 between the automation devices 106 and 112 in the automation system 126. The connection path 128 is a signal path between the automation devices 106 and 112. The connection path 128 also includes junction points which connect the automation devices 106 and 112 via signal wires 116. At step 406, location of the fault along the connection path 128 between the automation devices 106 and 112 is determined. The location of the fault is indicative of the physical location of the junction point in the plant environment 100 at which the fault exists. The method involved in determining location of the fault in the plant is described in greater detail with reference to FIG 5. At step 408, the location of the fault is rendered on a wiring network map of the automation system 126. The wiring network map is displayed on the handheld device 124 of the field engineer and hence the location of fault is displayed on the handheld device 124.

At step 410, current location of the field engineer in the plant environment 100 is determined. The current location is determined using a global positioning system coordinates received from the handheld device 124 of the field engineer. Alternatively, the current location is retrieved from the information associated with device/equipment located near to the field engineer in the plant environment 100. At step 412, an optimal route to reach from the current location of the field engineer to the location of the fault is computed. For example, one or more routes from the current location of field engineer to the location of the fault are computed using floor plan of the plant environment 100. The floor plan indicates aisle for field engineer. The distance associated with each route leading to the location of the fault is computed from the current location of the field engineer. The route with the shortest distance is determined as the optimal route. In another embodiment, a route which connects junction points at which faults exist and needs to be repaired by the field engineer in a sequential manner is selected as an optimal route.

At step 414, the field engineer is navigated using the wiring network map to reach the location of the fault via the optimal route. At step 416, an augmented view of the junction point where the fault exists is displayed on the handheld device 124 or an augmented reality device associated with the field engineer. The augmented reality view is displayed once the field engineer reaches the location of the fault. Alternatively, the augmented reality view is displayed when the field engineer repairs the fault at the junction point.

FIG 5 is a process flowchart 500 illustrating an exemplary method of determining location of the fault in the automation system 126, according to an embodiment of the present invention. At step 502, a heartbeat signal is transmitted to an automation device positioned at the end of connection path from the automation device positioned at the start of connection path using a unique address of the connection path. For example, the unique address of the connection path is derived based on the unique identifiers associated with the automation devices, junction points in the connection path. The unique address of the connection path may be indicated as CT40R08I006JB12CB10TE206 as a signal wire connects a controller 40 to rack 08 to IO card 06 and to the cabinet via junction box 12 and then reaches a terminal box 206. In one embodiment, the heart beat signal is transmitted periodically to the end automation devices. In this embodiment, the heart beat signal is sent to end automation devices in all connection paths in the automation system. In another embodiment, the heart beat signal is transmitted upon receiving a request to locate a fault from the handheld device 124 of the field engineer. The automation device 112 located at the end of connection path sends an acknowledgement signal to the automation device 106 at the start of connection path. For example, the automation device 106 at the start of connection path may be a programmable logic controller and the automation device 112 at the end of connection path may be a field device.

At step 504, it is determined whether an acknowledgement signal is received from the automation device 112 at the end of connection path in response to the heart beat signal. At step 506, at least one connection path 128 from which the acknowledgement signal is not received is determined. The acknowledgement signal may not be received in response to the heart beat signal as the fault exists in the determined connection path 128.

At step 508, real-time voltage and current values at each junction point in the connection path 128 are measured using voltage and current measurement sensors in the automation system 126. At step 510, the real-time voltage and current values associated with the respective junction point are compared with corresponding reference voltage and current values associated with the junction point.

At step 512, it is determined whether the real-time voltage and current values associated with the respective junction point matches with the corresponding reference voltage and current values associated with the junction point. If there is a match, then the process 500 ends at step 516. If there is no match, then at step 514, a junction point whose real-time voltage and current values do not match with the reference voltage and current values is identified. The identified junction point is a point where the fault exists in the connection path 128. In this manner, the location of the fault in the automation system 126 is automatically determined.

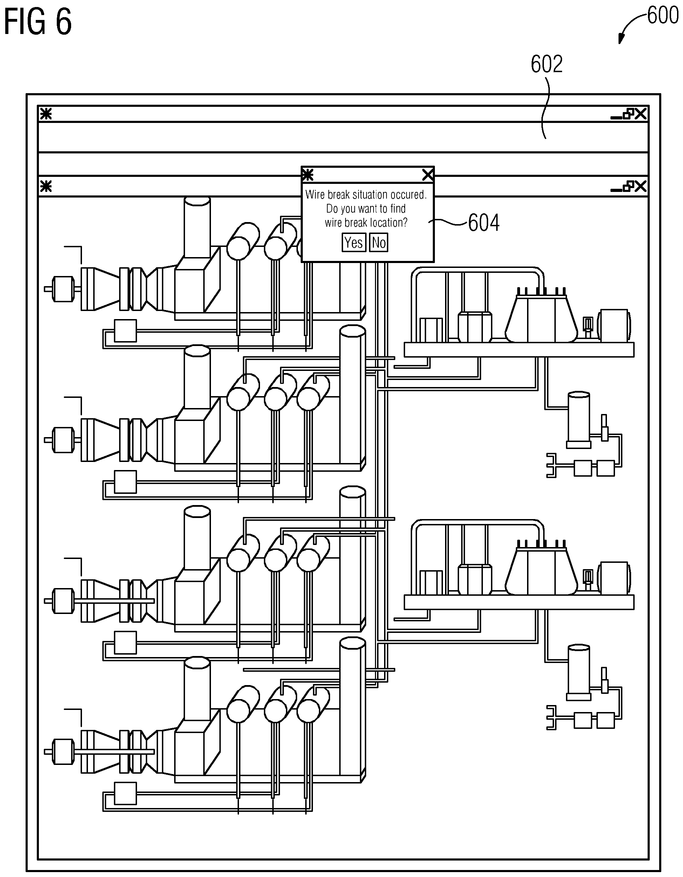

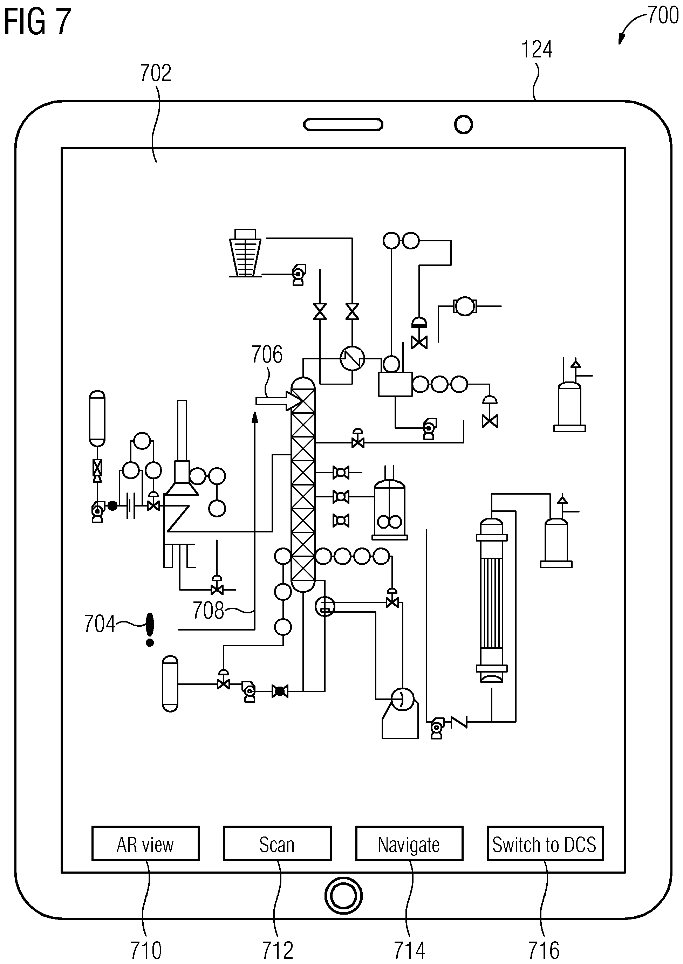

FIG 6 is a screenshot view 600 depicting plant data 602 displayed on a human-machine interface such as 114 of the automation system such as 126, according to an embodiment of the present invention. In FIG 6, the human-machine interface such as 114 displays a process and equipment data of the plant environment such as 100. When a fault occurs in the automation system such as 126, the human-machine interface such as 114 displays an alarm 604 indicative of a wire break has occurred in the plant environment such as 100. Also, the human-machine interface such as 114 checks with an operator as whether location of the wire break needs to be identified automatically. If the operator instructs the human-machine interface such as 114 to provide location of the wire break in the plant environment such as 100, the human-machine interface such as 114 sends a command to the server such as 102 via the controller such as 106. Accordingly, the server such as 102 determines location of wire break and renders the location of wire break on the wiring network map displayed on the handheld device such as 124 as shown in FIG 7.

FIG 7 illustrates a schematic representation 700 of the handheld device 124 displaying location of wire break on a wiring network map 702, according to an embodiment of the present invention. When the server 102 determines the wire break, the handheld device 124 displays the location 706 of the wire break on the wiring network map 702. The wiring network map 702 displays wiring along different connection paths between automation devices such as 106 and 112 connected via the signal wires such as 116. The location 702 of the wire break is a junction point in the connection path such as 128 at which there is the wire break. The location 706 of the wire break displayed on the wiring network map 702 enables the field engineer to reach to the junction point and conduct repair activity without a need for manually checking the entire automation system such as 126 to locate the wire break. Advantageously, this saves a lot of time and effort.

In some embodiments, the handheld device 124 navigates the field engineer from current location 704 to the location 706 of the wire break via an optimal route 708 computed by the server such as 102. The current location of the field engineer can be determined based on global positioning coordinates of the handheld device 124 or unique identifier of equipment sent by the field engineer via the handheld device 124. For example, the field engineer may send the unique identifier by scanning bar code or QR code associated with nearby equipment in the plant environment such as 100.

As shown in FIG 7, the handheld device 124 also displays an AR view button 710, a scan button 712, a navigate button 714, and a switch to DCS button 716. The AR view button 710 enables the field engineer to turn on an augmented view of the junction point at which fault exists. For example, when the user touches the AR view button 710, the handheld device 124 sends a request for augmented view to the server such as 102. Accordingly, the handheld device 124 displays the augmented view superimposed with information associated with the augmented view received from the server such as 102. The augmented view assists the field engineer in repairing the fault and confirming on-the-fly that the fault is successfully repaired.

The scan button 712 enables the field engineer to scan a QR code associated with nearby equipment, field device. The handheld device 712 communicates the scanned QR code to the server such as 102. The server such as 102 determines current location 708 of the field engineer based on the QR code. The current location helps in computing the optimal route 708 to navigate to the location 706 of the wire break.

The navigate button 714 enables the handheld device 124 to navigate of the field engineer from the current location 704 to the location 706 of the wire break via the optimal route 708. The switch to DCS button 716 displays a distributed computing system (DCS) view on the handheld device 124. The DCS view enables the field engineer to access the plant data 602 on the handheld device 124. Advantageously, the field engineer need not go to the human-machine interface such as 112 to access the plant data 602.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

## Claims

1. A method of automatically locating a fault in an automation system (126) in a plant environment (100), comprising:
- providing a wiring network map (702) of the automation system (126), wherein the wiring network map is generated using at least one wiring diagram associated with the automation system (126);
- determining by a processor (202), a fault in at least one connection path (128) between automation devices (106, 112) in the automation system (126), wherein the connection path (128) comprises one or more junction points (108, 110) which connect the automation devices (106, 112) via signal wires (116);
- determining, by the processor (202), a location (706) of a fault along the connection path (128) between the automation devices (106, 112), wherein the location (706) of the fault is indicative of a physical location of the junction point in the plant (100) at which the fault exists, comprising:
- measuring real-time voltage and current values at each junction point in the connection path (128) using voltage and current measurement sensors;
- comparing the real-time voltage and current values associated with the respective junction point with corresponding reference voltage and current values associated with the junction point;
- determining whether the real-time voltage and current values associated with the respective junction point matches with corresponding reference voltage and current values associated with the junction point; and
- identifying at least one junction point whose real-time voltage and current values do not match with the reference voltage and current values, wherein the fault exists at the identified junction point; and
- rendering, by the processor (202), the location (706) of the fault on the wiring network map (702) of the automation system (126).

2. The method according to claim 1, wherein the wiring network map (702) is a representation of a physical wiring system in the plant environment (100), wherein the wiring network map (702) is indicative of connection paths (128) connecting automation devices (106, 112) via junction points, and wherein the wiring network map (702) comprises unique addresses associated with the connection paths (128), unique identifiers associated with the automation devices (106, 112) and the junction points, and automated function instances associated with the automation system (126) linked to the unique identifiers.

3. The method according to claim 1 or 2, wherein determining the fault in the at least one connection path (128) between the automation devices (106, 112) comprises:
- transmitting a heart beat signal to the automation device (112) positioned at the end of each connection path (128) from the automation device (106) at the start of said each connection path (128) using an unique address of said each connection path (128);
- determining whether an acknowledgement signal is received from the automation device (112) at the end of said each connection path (128) in response to the heart beat signal; and
- determining the at least one connection path (128) from which the acknowledgment signal is not received, wherein the determined connection path (128) is a connection path in which the fault exists.

4. The method according to claim 1, further comprising:
- determining a current location (704) of a field engineer in the plant (100) based on location coordinates of a handheld device (124) of the field engineer;
- computing a optimal route (708) to the location (706) of the fault in the connection path (128); and
- navigating the field engineer from the current location (706) to the location (704) of the fault via the optimal route (708) using the wiring network map (702) rendered on the handheld device (124).

5. The method according to claim 1, further comprising:
- providing an augmented view of the junction point superimposed with information associated with the augmented view of the junction point during repair of the fault at the junction point.

6. The method according to claim 1, further comprising:
- predicting occurrence of fault in the automation system (126) by analyzing information of previous faults occurred in the automation system (126).

7. An apparatus (102) comprising:
- a processor (202); and
- a memory (204) coupled to the processor (202), wherein the memory (204) comprises a maintenance management module (118) stored in the form of machine-readable instructions and executable by the processor (202), wherein the maintenance management module (118) is configured for:
- providing a wiring network map (702) of an automation system (126) in a plant environment (100), wherein the wiring network map (702) is generated using at least one wiring diagram associated with the automation system (126) ;
- determining a fault in least one connection path (128) between automation devices (106, 112) in the automation system (126), wherein the connection path (128) comprises one or more junction points (108, 110) which connect the automation devices (106, 112) via signal wires (116);
- determining a location (706) of a fault along the connection path (128) between the automation devices (106, 112), wherein the location (706) of the fault is indicative of a physical location of the junction point in the plant (100) at which the fault exists, the maintenance management module (118) is configured for:
comparing real-time voltage and current values associated with the respective junction point with corresponding reference voltage and current values associated with the junction point;
determining whether the real-time voltage and current values associated with the respective junction point matches with corresponding reference voltage and current values associated with the junction point; and
identifying at least one junction point whose real-time voltage and current values do not match with the reference voltage and current values, wherein the fault exists at the identified junction point; and
- rendering the location (706) of the fault on the wiring network map (702) of the automation system (126).

8. The apparatus (102) according to claim 7, wherein the wiring network map (702) is a representation of a physical wiring system in the plant environment (106), wherein the wiring network map (702) is indicative of connection paths (128) connecting automation devices (106, 112) via junction points, and wherein the wiring network map (702) comprises unique addresses associated with the connection paths (128), unique identifiers associated with the automation devices (106, 112) and the junction points, and automated function instances associated with the automation system (126) linked to the unique identifiers.

9. The apparatus (102) according to claim 7 or 8, wherein in determining the fault in the at least one connection path (128), the maintenance management module (118) is configured for:
- transmitting a heart beat signal to the automation device (112) positioned at the end of each connection path (128) from the automation device (106) at the start of said each connection path (128) using the unique address of said each connection path (128);
- determining whether an acknowledgement signal is received from the automation device (112) at the end of said each connection path (128) in response to the heart beat signal; and
- determining the at least one connection path (128) from which the acknowledgment signal is not received, wherein the determined connection path (128) is a connection path in which the fault exists.

10. The apparatus (102) according to claim 7, wherein the maintenance management module (118) is configured for:
determining a current location ((704) of a field engineer in the plant (100) based on location coordinates of a handheld device (124) of the field engineer;
computing a optimal route (708) to the location (706) of the fault in the connection path (128); and
navigating the field engineer from the current location (704) to the location (706) of the fault via the optimal route (708) using the wiring network map (702) rendered on the handheld device (124).

11. The apparatus (102) according to claim 7, wherein the maintenance management module (118) is configured for:
providing an augmented view of the junction point superimposed with information associated with the augmented view of the junction point during repair of the fault at the junction point.

12. The apparatus (102) according to claim 7, wherein the maintenance management module (118) is configured for:
predicting occurrence of fault in the automation system (126) by analyzing information of previous faults occurred in the automation system (126).

13. A maintenance management system comprising:
a server (102) according to claims 7 to 12; and
one or more handheld devices (124) adapted for assisting field engineer in maintenance and repair activities in a plant environment (100), wherein the one or more handheld devices (124) are communicatively coupled to the server (102) via a network (104).

## Patentansprüche

1. Verfahren zum automatischen Lokalisieren eines Fehlers in einem Automatisierungssystem (126) in einer Anlagenumgebung (100), das Folgendes umfasst:
- Bereitstellen eines Beschaltungsnetzwerkplans (702) des Automatisierungssystems (126), wobei der Beschaltungsnetzwerkplan unter Verwendung mindestens einer mit dem Automatisierungssystem (126) assoziierten Schaltskizze erstellt wird;
- Bestimmen, durch einen Prozessor (202), eines Fehlers in mindestens einem Verbindungspfad (128) zwischen Automatisierungsvorrichtungen (106, 112) in dem Automatisierungssystem (126), wobei der Verbindungspfad (128) einen oder mehrere Anschlusspunkte (108, 110) umfasst, die die Automatisierungsvorrichtungen (106, 112) über Signaldrähte (116) verbinden;
- Bestimmen, durch den Prozessor (202), eines Orts (706) eines Fehlers entlang des Verbindungspfads (128) zwischen den Automatisierungsvorrichtungen (106, 112), wobei der Ort (706) des Fehlers einen physischen Ort des Anschlusspunkts in der Anlage (100) angibt, an dem der Fehler vorliegt, umfassend:
- Messen von Echtzeitspannungs- und -stromwerten an jedem Anschlusspunkt in dem Verbindungspfad (128) unter Verwendung von Spannungs- und Strommesssensoren;
- Vergleichen der mit dem jeweiligen Anschlusspunkt assoziierten Echtzeitspannungs- und -stromwerte mit entsprechenden mit dem Anschlusspunkt assoziierten Referenzspannungs- und -stromwerten;
- Bestimmen, ob die mit dem jeweiligen Anschlusspunkt assoziierten Echtzeitspannungs- und -stromwerte mit entsprechenden mit dem Anschlusspunkt assoziierten Referenzspannungs- und -stromwerten übereinstimmen; und
- Identifizieren mindestens eines Anschlusspunkts, dessen Echtzeitspannungs- und -stromwerte nicht mit den Referenzspannungs- und -stromwerten übereinstimmen, wobei der Fehler an dem identifizierten Anschlusspunkt vorliegt; und
- Anzeigen, durch den Prozessor (202), des Orts (706) des Fehlers auf dem Beschaltungsnetzwerkplan (702) des Automatisierungssystems (126).

2. Verfahren nach Anspruch 1, wobei der Beschaltungsnetzwerkplan (702) eine Darstellung eines physischen Beschaltungssystems in der Anlagenumgebung (100) ist, wobei der Beschaltungsnetzwerkplan (702) Verbindungspfade (128) angibt, die Automatisierungsvorrichtungen (106, 112) über Anschlusspunkte verbinden, und wobei der Beschaltungsnetzwerkplan (702) eindeutige Adressen, die mit den Verbindungspfaden (128) assoziiert sind, eindeutige Kennungen, die mit den Automatisierungsvorrichtungen (106, 112) und den Anschlusspunkten assoziiert sind, und automatisierte Funktionsinstanzen, die mit dem Automatisierungssystem (126) assoziiert und mit den eindeutigen Kennungen verknüpft sind, umfasst.

3. Verfahren nach Anspruch 1 oder 2, wobei das Bestimmen des Fehlers in dem mindestens einen Verbindungspfad (128) zwischen den Automatisierungsvorrichtungen (106, 112) Folgendes umfasst:
- Übertragen eines Heartbeat-Signals an die am Ende jedes Verbindungspfads (128) angeordnete Automatisierungsvorrichtung (112) von der Automatisierungsvorrichtung (106) am Beginn des jeden Verbindungspfads (128) unter Verwendung einer eindeutigen Adresse des jeden Verbindungspfads (128);
- Bestimmen, ob ein Bestätigungssignal von der Automatisierungsvorrichtung (112) am Ende des jeden Verbindungspfads (128) als Reaktion auf das Heartbeat-Signal empfangen wird; und
- Bestimmen des mindestens einen Verbindungspfads (128), von dem das Bestätigungssignal nicht empfangen wird, wobei der bestimmte Verbindungspfad (128) ein Verbindungspfad ist, in dem der Fehler vorliegt.

4. Verfahren nach Anspruch 1, das ferner Folgendes umfasst:
- Bestimmen eines aktuellen Standorts (704) eines Wartungs-und Servicetechnikers in der Anlage (100) basierend auf Standortkoordinaten einer Mobilvorrichtung (124) des Wartungs-und Servicetechnikers;
- Berechnen einer optimalen Route (708) zu dem Ort (706) des Fehlers in dem Verbindungspfad (128); und
- Navigieren des Wartungs- und Servicetechnikers von dem aktuellen Standort (706) zu dem Ort (704) des Fehlers über die optimale Route (708) unter Verwendung des auf der Mobilvorrichtung (124) angezeigten Beschaltungsnetzwerkplans (702).

5. Verfahren nach Anspruch 1, das ferner Folgendes umfasst:
- Bereitstellen einer erweiterten Ansicht des Anschlusspunkts überlagert mit Informationen in Zusammenhang mit der erweiterten Ansicht des Anschlusspunkts während der Behebung des Fehlers an dem Anschlusspunkt.

6. Verfahren nach Anspruch 1, das ferner Folgendes umfasst:
- Vorhersagen des Auftretens eines Fehlers in dem Automatisierungssystem (126) durch Analysieren von Informationen vorheriger in dem Automatisierungssystem (126) aufgetretener Fehler.

7. Einrichtung (102), die Folgendes umfasst:
- einen Prozessor (202); und
- einen Speicher (204), der mit dem Prozessor (202) gekoppelt ist, wobei der Speicher (204) ein Wartungsmanagementmodul (118) umfasst, das in Form von maschinenlesbaren Anweisungen gespeichert ist und durch den Prozessor (202) ausgeführt werden kann, wobei das Wartungsmanagementmodul (118) zu Folgendem ausgelegt ist:
- Bereitstellen eines Beschaltungsnetzwerkplans (702) eines Automatisierungssystems (126) in einer Anlagenumgebung (100), wobei der Beschaltungsnetzwerkplan (702) unter Verwendung mindestens einer mit dem Automatisierungssystem (126) assoziierten Schaltskizze erstellt wird;
- Bestimmen eines Fehlers in mindestens einem Verbindungspfad (128) zwischen Automatisierungsvorrichtungen (106, 112) in dem Automatisierungssystem (126), wobei der Verbindungspfad (128) einen oder mehrere Anschlusspunkte (108, 110) umfasst, die die Automatisierungsvorrichtungen (106, 112) über Signaldrähte (116) verbinden;
- Bestimmen eines Orts (706) eines Fehlers entlang des Verbindungspfads (128) zwischen den Automatisierungsvorrichtungen (106, 112), wobei der Ort (706) des Fehlers einen physischen Ort des Anschlusspunkts in der Anlage (100) angibt, an dem der Fehler vorliegt, wobei das Wartungsmanagementmodul (118) zu Folgendem ausgelegt ist:
Vergleichen von mit dem jeweiligen Anschlusspunkt assoziierten Echtzeitspannungs- und -stromwerten mit entsprechenden mit dem Anschlusspunkt assoziierten Referenzspannungs- und -stromwerten;
Bestimmen, ob die mit dem jeweiligen Anschlusspunkt assoziierten Echtzeitspannungs- und -stromwerte mit entsprechenden mit dem Anschlusspunkt assoziierten Referenzspannungs- und -stromwerten übereinstimmen; und
Identifizieren mindestens eines Anschlusspunkts, dessen Echtzeitspannungs- und -stromwerte nicht mit den Referenzspannungs- und -stromwerten übereinstimmen, wobei der Fehler an dem identifizierten Anschlusspunkt vorliegt; und
- Anzeigen des Orts (706) des Fehlers auf dem Beschaltungsnetzwerkplan (702) des Automatisierungssystems (126) .

8. Einrichtung (102) nach Anspruch 7, wobei der Beschaltungsnetzwerkplan (702) eine Darstellung eines physischen Beschaltungssystems in der Anlagenumgebung (106) ist, wobei der Beschaltungsnetzwerkplan (702) Verbindungspfade (128) angibt, die Automatisierungsvorrichtungen (106, 112) über Anschlusspunkte verbinden, und wobei der Beschaltungsnetzwerkplan (702) eindeutige Adressen, die mit den Verbindungspfaden (128) assoziiert sind, eindeutige Kennungen, die mit den Automatisierungsvorrichtungen (106, 112) und den Anschlusspunkten assoziiert sind, und automatisierte Funktionsinstanzen, die mit dem Automatisierungssystem (126) assoziiert und mit den eindeutigen Kennungen verknüpft sind, umfasst.

9. Einrichtung (102) nach Anspruch 7 oder 8, wobei das Wartungsmanagementmodul (118) beim Bestimmen des Fehlers in dem mindestens einen Verbindungspfad (128) zu Folgendem ausgelegt ist:
- Übertragen eines Heartbeat-Signals an die am Ende jedes Verbindungspfads (128) angeordnete Automatisierungsvorrichtung (112) von der Automatisierungsvorrichtung (106) am Beginn des jeden Verbindungspfads (128) unter Verwendung der eindeutigen Adresse des jeden Verbindungspfads (128);
- Bestimmen, ob ein Bestätigungssignal von der Automatisierungsvorrichtung (112) am Ende des jeden Verbindungspfads (128) als Reaktion auf das Heartbeat-Signal empfangen wird; und
- Bestimmen des mindestens einen Verbindungspfads (128), von dem das Bestätigungssignal nicht empfangen wird, wobei der bestimmte Verbindungspfad (128) ein Verbindungspfad ist, in dem der Fehler vorliegt.

10. Einrichtung (102) nach Anspruch 7, wobei das Wartungsmanagementmodul (118) zu Folgendem ausgelegt ist:
Bestimmen eines aktuellen Standorts (704) eines Wartungs- und
Servicetechnikers in der Anlage (100) basierend auf Standortkoordinaten einer Mobilvorrichtung (124) des Wartungs-und Servicetechnikers;
Berechnen einer optimalen Route (708) zu dem Ort (706) des Fehlers in dem Verbindungspfad (128); und
Navigieren des Wartungs- und Servicetechnikers von dem aktuellen Standort (704) zu dem Ort (706) des Fehlers über die optimale Route (708) unter Verwendung des auf der Mobilvorrichtung (124) angezeigten Beschaltungsnetzwerkplans (702).

11. Einrichtung (102) nach Anspruch 7, wobei das Wartungsmanagementmodul (118) zu Folgendem ausgelegt ist:
Bereitstellen einer erweiterten Ansicht des Anschlusspunkts überlagert mit Informationen in Zusammenhang mit der erweiterten Ansicht des Anschlusspunkts während der Behebung des Fehlers an dem Anschlusspunkt.

12. Einrichtung (102) nach Anspruch 7, wobei das Wartungsmanagementmodul (118) zu Folgendem ausgelegt ist:
Vorhersagen des Auftretens eines Fehlers in dem Automatisierungssystem (126) durch Analysieren von Informationen vorheriger in dem Automatisierungssystem (126) aufgetretener Fehler.

13. Wartungsmanagementsystem, das Folgendes umfasst:
einen Server (102) nach Ansprüchen 7 bis 12; und
eine oder mehrere Mobilvorrichtungen (124), eingerichtet zum Unterstützen eines Wartungs- und Servicetechnikers bei Wartungs-und Reparaturaktivitäten in einer Anlagenumgebung (100), wobei die eine oder die mehreren Mobilvorrichtungen (124) über ein Netzwerk (104) kommunikativ mit dem Server (102) gekoppelt sind.

## Revendications

1. Procédé de localisation automatique d'un défaut dans un système d'automatisation (126) dans un environnement d'usine (100), comprenant :
- la fourniture une carte de réseau de câblage (702) du système d'automatisation (126), la carte de réseau de câblage étant générée à l'aide d'au moins un schéma de câblage associé au système d'automatisation (126) ;
- la détermination par un processeur (202), d'un défaut dans au moins un chemin de connexion (128) entre des dispositifs d'automatisation (106, 112) dans le système d'automatisation (126), le chemin de connexion (128) comprenant un ou plusieurs points de jonction (108, 110) qui connectent les dispositifs d'automatisation (106, 112) par l'intermédiaire de fils de signalisation (116) ;
- la détermination, par le processeur (202), d'un emplacement (706) d'un défaut le long du chemin de connexion (128) entre les dispositifs d'automatisation (106, 112), l'emplacement (706) du défaut indiquant un emplacement physique du point de jonction dans l'usine (100) où réside le défaut, comprenant :
- la mesure de valeurs de tension et de courant en temps réel à chaque point de jonction dans le chemin de connexion (128) à l'aide de capteurs de mesure de tension et de courant ;
- la comparaison des valeurs de tension et de courant en temps réel associées au point de jonction respectif à des valeurs de tension et de courant de référence correspondantes associées au point de jonction ;
- la détermination que les valeurs de tension et de courant en temps réel associées au point de jonction respectif correspondent ou non à des valeurs de tension et de courant de référence correspondantes associées au point de jonction ; et
- l'identification d'au moins un point de jonction dont des valeurs de tension et de courant en temps réel ne correspondent pas aux valeurs de tension et de courant de référence, le défaut résidant au point de jonction identifié ; et
- le rendu, par le processeur (202), de l'emplacement (706) du défaut sur la carte de réseau de câblage (702) du système d'automatisation (126).

2. Procédé selon la revendication 1, dans lequel la carte de réseau de câblage (702) est une représentation d'un système de câblage physique dans l'environnement d'usine (100), la carte de réseau de câblage (702) indiquant des chemins de connexion (128) qui connectent des dispositifs d'automatisation (106, 112) par l'intermédiaire des points de jonction, et la carte de réseau de câblage (702) comprenant des adresses uniques associées aux chemins de connexion (128), des identifiants uniques associés aux dispositifs d'automatisation (106, 112) et aux points de jonction, et des instances de fonction automatisées associées au système d'automatisation (126) liées aux identifiants uniques.

3. Procédé selon la revendication 1 ou 2, dans lequel la détermination du défaut dans l'au moins un chemin de connexion (128) entre les dispositifs d'automatisation (106, 112) comprend
- la transmission d'un signal de rythme au dispositif d'automatisation (112) positionné à la fin de chaque chemin de connexion (128) à partir du dispositif d'automatisation (106) au début de chaque dit chemin de connexion (128) en utilisant une adresse unique de chaque dit chemin de connexion (128) ;
- la détermination qu'un signal d'accusé de réception est reçu ou non du dispositif d'automatisation (112) à la fin de chaque chemin de connexion (128) en réponse au signal de rythme ; et
- la détermination de l'au moins un chemin de connexion (128) à partir duquel le signal d'accusé de réception n'est pas reçu, le chemin de connexion déterminé (128) étant un chemin de connexion dans lequel réside le défaut.

4. Procédé selon la revendication 1, comprenant en outre :
- la détermination d'un emplacement actuel (704) d'un ingénieur de terrain dans l'usine (100) en fonction de coordonnées de localisation d'un dispositif portatif (124) de l'ingénieur de terrain ;
- le calcul d'un itinéraire optimal (708) jusqu'à l'emplacement (706) du défaut dans le chemin de connexion (128) ; et
- l'orientation de l'ingénieur de terrain depuis l'emplacement actuel (706) jusqu'à l'emplacement (704) du défaut via l'itinéraire optimal (708) à l'aide de la carte de réseau de câblage (702) rendue sur le dispositif portatif (124).

5. Procédé selon la revendication 1, comprenant en outre :
- la fourniture d'une vue augmentée du point de jonction superposée à des informations associées à la vue augmentée du point de jonction lors de la réparation du défaut au point de jonction.

6. Procédé selon la revendication 1, comprenant en outre :
- la prédiction d'une occurrence d'un défaut dans le système d'automatisation (126) en analysant des informations de défauts antérieurs survenus dans le système d'automatisation (126) .

7. Appareil (102) comprenant :
- un processeur (202) ; et
- une mémoire (204) couplée au processeur (202), la mémoire (204) comprenant un module de gestion de maintenance (118) mémorisé sous forme d'instructions lisibles par machine et exécutable par le processeur (202), le module de gestion de maintenance (118) étant configuré pour :
- fournir une carte de réseau de câblage (702) d'un système d'automatisation (126) dans un environnement d'usine (100), la carte de réseau de câblage (702) étant générée à l'aide d'au moins un schéma de câblage associé au système d'automatisation (126) ;
- déterminer un défaut dans au moins un chemin de connexion (128) entre des dispositifs d'automatisation (106, 112) dans le système d'automatisation (126), le chemin de connexion (128) comprenant un ou plusieurs points de jonction (108, 110) qui connectent les dispositifs d'automatisation (106, 112) par l'intermédiaire de fils de signalisation (116) ;
- déterminer un emplacement (706) d'un défaut le long du chemin de connexion (128) entre les dispositifs d'automatisation (106, 112), l'emplacement (706) du défaut indiquant un emplacement physique du point de jonction dans l'usine (100) où réside le défaut, le module de gestion de maintenance (118) étant configuré pour :
comparer des valeurs de tension et de courant en temps réel associées au point de jonction respectif à des valeurs de tension et de courant de référence correspondantes associées au point de jonction ;
déterminer que les valeurs de tension et de courant en temps réel associées au point de jonction respectif correspondent ou non à des valeurs de tension et de courant de référence correspondantes associées au point de jonction ; et
identifier au moins un point de jonction dont des valeurs de tension et de courant en temps réel ne correspondent pas aux valeurs de tension et de courant de référence, le défaut résidant au point de jonction identifié ; et
- rendre l'emplacement (706) du défaut sur la carte de réseau de câblage (702) du système d'automatisation (126).

8. Appareil (102) selon la revendication 7, dans lequel la carte de réseau de câblage (702) est une représentation d'un système de câblage physique dans l'environnement d'usine (106), la carte de réseau de câblage (702) indiquant des chemins de connexion (128) qui connectent des dispositifs d'automatisation (106, 112) par l'intermédiaire des points de jonction, et la carte de réseau de câblage (702) comprenant des adresses uniques associées aux chemins de connexion (128), des identifiants uniques associés aux dispositifs d'automatisation (106, 112) et aux points de jonction, et des instances de fonction automatisées associées au système d'automatisation (126) liées aux identifiants uniques.

9. Appareil (102) selon la revendication 7 ou 8, dans lequel, pour déterminer le défaut dans l'au moins un chemin de connexion (128), le module de gestion de maintenance (118) est configuré pour :
- transmettre un signal de rythme au dispositif d'automatisation (112) positionné à la fin de chaque chemin de connexion (128) à partir du dispositif d'automatisation (106) au début de chaque dit chemin de connexion (128) en utilisant l'adresse unique de chaque dit chemin de connexion (128) ;
- déterminer qu'un signal d'accusé de réception est reçu ou non du dispositif d'automatisation (112) à la fin de chaque chemin de connexion (128) en réponse au signal de rythme ; et
- déterminer l'au moins un chemin de connexion (128) à partir duquel le signal d'accusé de réception n'est pas reçu, le chemin de connexion déterminé (128) étant un chemin de connexion dans lequel réside le défaut.

10. Appareil (102) selon la revendication 7, dans lequel le module de gestion de maintenance (118) est configuré pour :
déterminer un emplacement actuel (704) d'un ingénieur de terrain dans l'usine (100) en fonction de coordonnées de localisation d'un dispositif portatif (124) de l'ingénieur de terrain ;
calculer un itinéraire optimal (708) jusqu'à l'emplacement (706) du défaut dans le chemin de connexion (128) ; et
orienter l'ingénieur de terrain depuis l'emplacement actuel (706) jusqu'à l'emplacement (704) du défaut via l'itinéraire optimal (708) à l'aide de la carte de réseau de câblage (702) rendue sur le dispositif portatif (124).

11. Appareil (102) selon la revendication 7, dans lequel le module de gestion de maintenance (118) est configuré pour :
fournir une vue augmentée du point de jonction superposée à des informations associées à la vue augmentée du point de jonction lors de la réparation du défaut au point de jonction.

12. Appareil (102) selon la revendication 7, dans lequel le module de gestion de maintenance (118) est configuré pour :
prédire l'occurrence d'un défaut dans le système d'automatisation (126) en analysant des informations de défauts antérieurs survenus dans le système d'automatisation (126).

13. Système de gestion de maintenance comprenant :
un serveur (102) selon les revendications 7 à 12 ; et
un ou plusieurs dispositifs portatifs (124) adaptés pour assister un ingénieur de terrain dans des activités de maintenance et de réparation dans un environnement d'usine (100), les un ou plusieurs dispositifs portatifs (124) étant couplés de manière communicative au serveur (102) par l'intermédiaire d'un réseau (104).
